# EUROPEAN PATENT APPLICATION

(11) **EP 4 783 349 A1**
(43) Date of publication of application: **29.07.2026**
(21) Application number: 25867161.9
(22) Date of filing: 11.07.2025
(51) Int. Cl.: H01M 50/59

(54) **ELECTRODE LEAD ASSEMBLY AND SECONDARY BATTERY**

(30) Priority: 06.12.2024 KR 20240180616
(71) Applicant: LG ENERGY SOLUTION, LTD., Seoul 07335 (KR)
(72) Inventor: Yoon, Kyoung Soon, Yuseong-gu, Daejeon 34122 (KR); Lee, Yong Tae, Yuseong-gu, Daejeon 34122 (KR); Ko, Myung Hoon, Yuseong-gu, Daejeon 34122 (KR); Park, Wan Geun, Yuseong-gu, Daejeon 34122 (KR); Kim, Nam Geol, Yuseong-gu, Daejeon 34122 (KR); Jeon, Young Je, Yuseong-gu, Daejeon 34122 (KR)
(74) Representative: Goddar, Heinz J.
(86) International application number: PCT/KR2025/010149
(87) International publication number: WO 2026/121447

(57) **Abstract**

The present disclosure relates to a secondary battery including an electrode assembly; an electrode tab electrically connected to the electrode assembly and bent to be in close contact with an end of the electrode assembly; a pouch provided to surround a perimeter of the electrode assembly; an electrode lead including a first lead portion electrically connected to the electrode tab and accommodated inside the pouch to be stacked on the electrode tab, and a second lead portion having one end connected to the first lead portion and the other end exposed to the outside of the pouch; and a protector provided to surround an edge of the first lead portion, thereby obtaining the advantageous effect of minimizing damage to a pouch and improving stability and reliability.

## Description

### TECHNICAL FIELD

### CROSS-REFERENCE TO RELATED APPLICATIONS

The present application is based on and claims priority from Korean Patent Application No. 10-2024-0180616, filed on December 6, 2024, with the Korean Intellectual Property Office, the disclosure of which is incorporated herein in its entirety by reference.

### TECHNICAL FIELD

The present disclosure relates to an electrode lead assembly and a secondary battery, and more specifically, to an electrode lead assembly and a secondary battery that may minimize damage to a pouch and improve stability and reliability.

### BACKGROUND ART

With the development of technology in electric vehicles, energy storage systems (ESSs), and portable electronic devices, the demand for a lithium secondary battery as an energy source is rapidly increasing.

A lithium secondary battery may be classified into a pouch type and a can type depending on the material of a case (exterior material) that accommodates an electrode assembly, and the electrode assembly may be classified into a wound type (jelly roll type), a stacked type, a stack and lamination type, or a stack and folding type, depending on the manufacturing method and shape.

Among these, since a pouch-type secondary battery uses a pouch made of a flexible polymer material to form its exterior, it may significantly reduce the weight of the battery compared to a cylindrical or prismatic battery using a metal can, thereby enabling lightweight batteries and having the advantage of being able to be made into various shapes, which attracts a lot of attention.

In the pouch-type secondary battery, electrode assemblies are accommodated inside a pouch in a stacked manner, wherein an electrode tab and an electrode lead are connected to the electrode assembly, and the electrode lead protrudes from the pouch. The electrode lead is electrically connected to an external device through contact to receive power from the external device.

Meanwhile, recently, as a method of maximizing the volumetric efficiency or volumetric energy density of a secondary battery, a method of connecting the electrode lead to the electrode tab while bending the electrode tab to be in close contact with the end of the electrode assembly is being considered to minimize the terrace area (edge area) of the pouch.

However, conventionally, there is a problem in that the pouch is deformed or damaged due to interference (contact) between the electrode lead accommodated inside the pouch to be electrically connected to the electrode tab and the pouch itself.

Moreover, if the pouch is deformed or damaged, the electrolyte may leak, which results in a problem of not only degrading the performance and life of the secondary battery, but also increasing the risk of explosion.

Accordingly, various studies have been conducted recently to minimize damage to and deformation of the pouch while minimizing the terrace area (edge area) of the pouch, but these are still insufficient, and further development thereof is required.

### DISCLOSURE

### TECHNICAL PROBLEM

The embodiment of the present disclosure is directed to providing an electrode lead assembly and a secondary battery that may minimize damage to a pouch and improve stability and reliability.

In particular, the embodiment of the present disclosure is directed to minimizing interference and contact between the electrode lead and the pouch, and minimizing damage to and deformation of the pouch.

Above all, the embodiment of the present disclosure is directed to minimizing damage to and deformation of the pouch due to interference between the electrode lead and the pouch in a structure of bending the electrode tab to be in close contact with the end of the electrode assembly to minimize the terrace area (edge area) of the pouch.

The problem to be solved in the embodiment is not limited thereto, and it can be said that the purpose or effect that may be identified from the method of solution or embodiment of the problem described below is also included.

### TECHNICAL SOLUTION

According to a preferred embodiment of the present disclosure for achieving the objects of the present disclosure described above, a secondary battery includes an electrode assembly; an electrode tab electrically connected to the electrode assembly and bent to be in close contact with an end of the electrode assembly; a pouch provided to surround a perimeter of the electrode assembly; an electrode lead including a first lead portion electrically connected to the electrode tab and accommodated inside the pouch to be stacked on the electrode tab, and a second lead portion having one end connected to the first lead portion and the other end exposed to the outside of the pouch; and a protector provided to surround an edge of the first lead portion.

This is to minimize damage to a pouch and improve stability and reliability.

That is, recently, a method of connecting the electrode lead to the electrode tab while bending the electrode tab to be in close contact with the end of the electrode assembly is being considered to minimize the terrace area (edge area) of the pouch. However, conventionally, there is a problem in that the pouch is deformed or damaged due to interference (contact) between the electrode lead accommodated inside the pouch to be electrically connected to the electrode tab and the pouch itself. Moreover, if the pouch is deformed or damaged, the electrolyte may leak, which results in a problem of not only degrading the performance and life of the secondary battery, but also increasing the risk of explosion.

However, by providing a protector to surround the edge of the first lead portion of the electrode lead accommodated inside the pouch, the embodiment of the present disclosure may obtain the advantageous effect of minimizing interference and contact between the electrode lead and the pouch, and minimizing damage to and deformation of the pouch.

Above all, the embodiment of the present disclosure may obtain the advantageous effect of minimizing damage to and deformation of the pouch due to interference between the electrode lead and the pouch while minimizing the terrace area (edge area) of the pouch.

The first lead portion and the second lead portion may be connected in various ways depending on required conditions and design specifications.

According to a preferred embodiment of the present disclosure, the secondary battery may include a connection lead portion that is bent with respect to the first lead portion and the second lead portion therebetween and continuously connects the first lead portion and the second lead portion.

According to another embodiment of the present disclosure, the first lead portion and the second lead portion may be integrally connected by welding.

According to a preferred embodiment of the present disclosure, the secondary battery may include at least one of a first guide slot formed in the first lead portion to allow the electrode tab to be exposed and a second guide slot formed in the connection lead portion to allow the electrode tab to be exposed.

The protector may be provided in various structures capable of surrounding an edge of the first lead portion.

According to a preferred embodiment of the present disclosure, the protector may include a first protector member provided to surround an edge of a central area of the first lead portion.

The first protector member may be provided in various structures capable of surrounding an edge of a central area of the first lead portion.

According to a preferred embodiment of the present disclosure, the first protector member may include a first protector body provided to cover one surface of the first lead portion facing the electrode tab; and a first protector protrusion provided at an end of the first protector body and defining a first receiving groove in which the edge of the central area of the first lead portion is accommodated.

According to a preferred embodiment of the present disclosure, a first gap may be defined between one surface of the first lead portion facing the electrode tab and the electrode assembly via the first protector member.

In this way, by defining a first gap (space) between one surface of the first lead portion and the electrode assembly via the first protector member, the embodiment of the present disclosure may obtain the advantageous effect of minimizing mutual interference (contact) between the first lead portion and the electrode assembly, and minimizing deformation of and damage to the first lead portion and the electrode assembly due to interference between the first lead portion and the electrode assembly.

According to a preferred embodiment of the present disclosure, the protector may include a second protector member provided to surround an edge of a side area of the first lead portion.

The second protector member may be provided in various structures capable of surrounding an edge of a side area of the first lead portion.

According to a preferred embodiment of the present disclosure, the second protector member may include a second protector body formed along the edge of the side area of the first lead portion; and a second protector protrusion provided on the second protector body and defining a second receiving groove in which the edge of the side area of the first lead portion is accommodated.

According to a preferred embodiment of the present disclosure, a second gap may be defined between the other surface of the first lead portion facing the pouch and the pouch via the second protector member.

In this way, by defining a second gap (space) between the other surface of the first lead portion and the pouch via the second protector member, the embodiment of the present disclosure may obtain the advantageous effect of minimizing mutual interference (contact) between the first lead portion and the pouch, and minimizing deformation of and damage to the pouch due to interference between the first lead portion and the pouch.

According to a preferred embodiment of the present disclosure, the protector may be provided to be selectively detachable from the first lead portion.

According to another preferred embodiment of the present disclosure, the protector may be formed as a unitary body with the first lead portion by double injection molding.

According to another preferred aspect of the present disclosure, an electrode lead assembly for a secondary battery including an electrode assembly; an electrode tab electrically connected to the electrode assembly and bent to be in close contact with an end of the electrode assembly; and a pouch provided to surround a perimeter of the electrode assembly, includes an electrode lead including a first lead portion electrically connected to the electrode tab and accommodated inside the pouch to be stacked on the electrode tab, and a second lead portion having one end connected to the first lead portion and the other end exposed to the outside of the pouch; and a protector provided to surround an edge of the first lead portion.

According to another preferred aspect of the present disclosure, the protector may include at least one of a first protector member provided to surround an edge of a central area of the first lead portion and a second protector member provided to surround an edge of a side area of the first lead portion.

According to another preferred aspect of the present disclosure, the first protector member may include a first protector body provided to cover one surface of the first lead portion facing the electrode tab; and a first protector protrusion provided at an end of the first protector body and defining a first receiving groove in which the edge of the central area of the first lead portion is accommodated.

According to another preferred aspect of the present disclosure, the second protector member may include a second protector body formed along the edge of the side area of the first lead portion; and a second protector protrusion provided on the second protector body and defining a second receiving groove in which the edge of the side area of the first lead portion is accommodated.

According to another preferred aspect of the present disclosure, a first gap may be defined between one surface of the first lead portion facing the electrode tab and the electrode assembly via the first protector member, and a second gap may be defined between the other surface of the first lead portion facing the pouch and the pouch via the second protector member.

According to another preferred aspect of the present disclosure, the electrode lead assembly may include a connection lead portion that is bent with respect to the first lead portion and the second lead portion and continuously connects the first lead portion and the second lead portion.

According to another preferred aspect of the present disclosure, the electrode lead assembly may include at least one of a first guide slot formed in the first lead portion to allow the electrode tab to be exposed and a second guide slot formed in the connection lead portion to allow the electrode tab to be exposed.

### ADVANTAGEOUS EFFECTS

As described above, according to the embodiment of the present disclosure, it is possible to obtain the advantageous effect of minimizing damage to a pouch and improving stability and reliability.

In particular, according to the embodiment of the present disclosure, it is possible to obtain the advantageous effect of minimizing interference and contact between the electrode lead and the pouch, and minimizing damage to and deformation of the pouch.

Above all, according to the embodiment of the present disclosure, it is possible to obtain the advantageous effect of minimizing damage to and deformation of the pouch due to interference between the electrode lead and the pouch in a structure of bending the electrode tab to be in close contact with the end of the electrode assembly to minimize the terrace area (edge area) of the pouch.

### DESCRIPTION OF DRAWINGS

FIG. 1 is a view for describing a secondary battery according to an embodiment of the present disclosure.
FIG. 2 is a perspective view for describing an electrode lead in a secondary battery according to an embodiment of the present disclosure.
FIG. 3 is a development view for describing an electrode lead in a secondary battery according to an embodiment of the present disclosure.
FIG. 4 is a view for describing a protector in a secondary battery according to an embodiment of the present disclosure.
FIG. 5 is a view for describing a process of assembling a protector and an electrode lead in a secondary battery according to an embodiment of the present disclosure.
FIG. 6 is a view for describing an electrode tab in a secondary battery according to an embodiment of the present disclosure.
FIG. 7 is a view for describing a process of connecting an electrode lead and an electrode tab in a secondary battery according to an embodiment of the present disclosure.
FIG. 8 is a view for describing an electrode tab in a secondary battery according to an embodiment of the present disclosure.
FIG. 9 is a view for describing a first modified example of an electrode lead in a secondary battery according to an embodiment of the present disclosure.
FIG. 10 is a perspective view for describing a second modified example of an electrode lead in a secondary battery according to an embodiment of the present disclosure.
FIG. 11 is a development view for describing a second modified example of an electrode lead in a secondary battery according to an embodiment of the present disclosure.
FIG. 12 is a perspective view for describing a third modified example of an electrode lead in a secondary battery according to an embodiment of the present disclosure.
FIG. 13 is a development view for describing a third modified example of an electrode lead in a secondary battery according to an embodiment of the present disclosure.

### BEST MODE

Hereinafter, preferred embodiments of the present disclosure will be described in detail with reference to the accompanying drawings.

However, the technical idea of the present disclosure is not limited to some of the embodiments described, but may be implemented in various different forms, and within the scope of the technical idea of the present disclosure, one or more of the components may be selectively combined or substituted between the embodiments.

Additionally, the terms (including technical and scientific terms) used in the embodiments of the present disclosure may be construed as meanings generally understood by those having ordinary skill in the art to which the present disclosure pertains, unless explicitly specifically defined and described, and terms that are commonly used, such as terms defined in dictionaries, may be construed in consideration of the contextual meaning of the related technology.

Additionally, the terms used in the embodiments of the present disclosure are for the purpose of describing the embodiments and are not intended to limit the present disclosure.

In this specification, the singular form may include the plural form unless specifically stated in the phrase, and when described as "at least one (or more than one) of A, B, and C", it may include one or more of all combinations that can be combined with A, B, and C.

Additionally, in describing the components of the embodiments of the present disclosure, terms such as first, second, A, B, (a), (b), and the like may be used.

These terms are only intended to distinguish the components from other components, and do not limit the nature, order, or sequence of the corresponding components.

And, when a component is described as being 'connected', 'coupled', or 'contacted' to another component, this may include not only cases where the component is directly connected, coupled, or contacted to another component, but also cases where the component is 'connected', 'coupled', or 'contacted' to another component through a third component.

Additionally, when it is described as being formed or disposed "on top of (above) or on bottom of (below)" each component, the top (above) or bottom (below) may include not only cases where two components are in direct contact with each other, but also cases where one or more other components are formed or disposed between the two components. Additionally, when expressed as "on top of (above) or on bottom of (below)", this may include the meaning of not only the upward direction but also the downward direction based on one component.

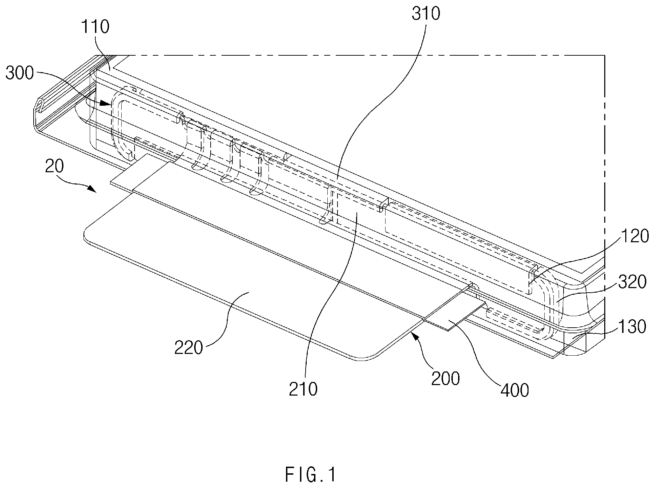

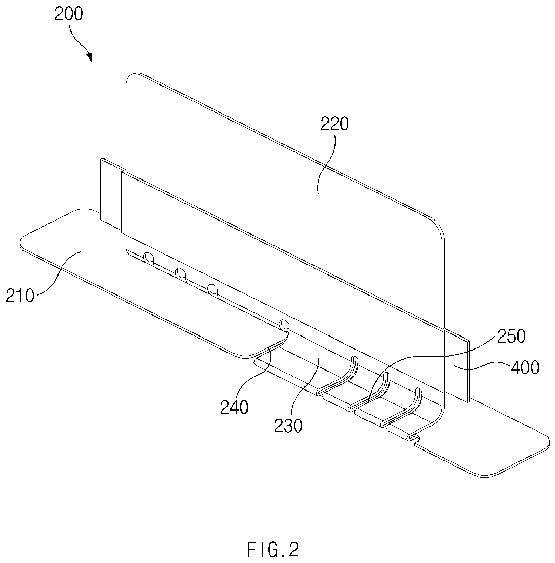

Referring to FIGS. 1 to 13, a secondary battery 10 according to the embodiment of the present disclosure includes an electrode assembly 110; an electrode tab 120 electrically connected to the electrode assembly 110 and bent to be in close contact with an end of the electrode assembly 110; a pouch 130 provided to surround a perimeter of the electrode assembly 110; an electrode lead 200 including a first lead portion 210 electrically connected to the electrode tab 120 and accommodated inside the pouch 130 to be stacked on the electrode tab 120, and a second lead portion 220 having one end connected to the first lead portion 210 and the other end exposed to the outside of the pouch 130; and a protector 300 provided to surround an edge of the first lead portion 210.

Referring to FIG. 1, the electrode assembly 110 may be provided in various structures depending on required conditions and design specifications, and the present disclosure is not limited or restricted by the structure of the electrode assembly 110.

For reference, the electrode assembly 110 may include an electrode (not shown) and a separator (not shown) laminated on the electrode.

For example, the electrode may include a first electrode (e.g., positive electrode) laminated on one surface (e.g., top surface) of the separator, and a second electrode (e.g., negative electrode) laminated on the other surface (e.g., bottom surface) of the separator.

The first electrode (positive electrode) and the second electrode (negative electrode) may be formed by applying a slurry obtained by mixing an electrode active material, a binder, and a plasticizer to a positive electrode current collector and a negative electrode current collector.

The positive electrode current collector is not particularly limited as long as it has conductivity without causing a chemical change in the battery. For example, stainless steel, aluminum, nickel, titanium, calcined carbon, or aluminum or stainless steel surface-treated with carbon, nickel, titanium, silver, or the like may be used as the positive electrode current collector.

The negative electrode current collector is not particularly limited as long as it has conductivity without causing a chemical change in the battery. For example, copper, stainless steel, aluminum, nickel, titanium, calcined carbon, or aluminum or stainless steel surface-treated with carbon, nickel, titanium, silver, or the like may be used as the negative electrode current collector. For example, a thin copper film (e.g., electrolytic copper foil or pressure copper foil) may be used as the negative electrode current collector.

The separator is designed to separate the negative electrode and the positive electrode and provide a passage for lithium ions to move, and may be used without any particular limitation as long as it is generally used as a separator in a lithium secondary battery 10.

For example, as a separator, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof may be used.

Alternatively, a conventional porous nonwoven fabric, for example, a nonwoven fabric made of high-melting-point glass fibers, polyethylene terephthalate fibers, or the like may be used as a separator, or a coated separator including a ceramic component or a polymer material may be used to ensure heat resistance or mechanical strength.

The electrode tab 120 is electrically connected to the electrode assembly 110 and is bent to be in close contact with an end of the electrode assembly 110.

In the embodiment of the present disclosure, the term "electrode tab 120" is defined as including both a positive electrode tab 120 electrically connected the positive electrode and a negative electrode tab 120 electrically connected to the negative electrode.

Hereinafter, an example in which the electrode tab 120 is provided at each of both ends along the length direction (overall length direction) of the electrode assembly 110 will be described.

The electrode tab 120 may be formed of a conventional metal material (e.g., copper, aluminum) that may be electrically connected to the electrode assembly 110, and the present disclosure is not limited or restricted by the material or characteristics of the electrode tab 120.

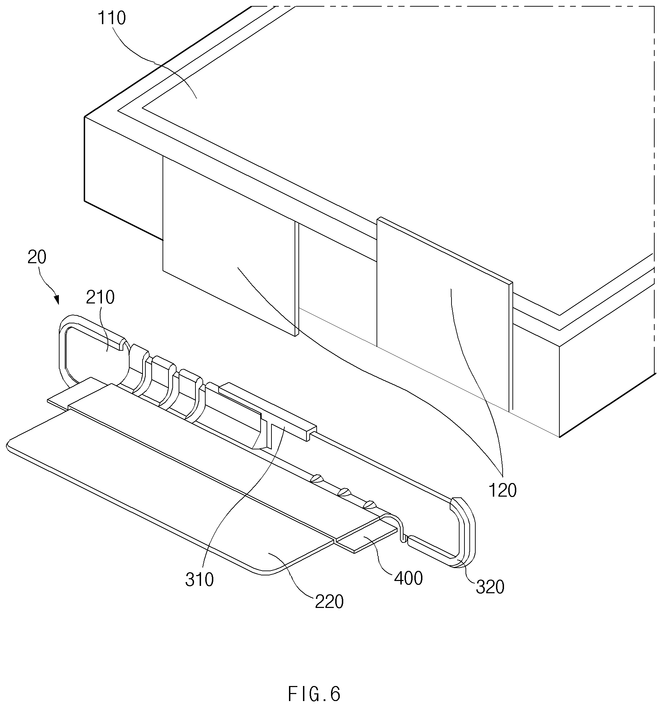

Additionally, in the embodiment of the present disclosure, when the electrode tab 120 is bent to be in close contact with the end of the electrode assembly 110, it may be understood that the electrode tab 120 is bent in a direction perpendicular to the length direction (overall length direction) of the electrode assembly 110 and is in close contact with the end of the electrode assembly 110. (see FIG. 6)

This is to maximize the volumetric efficiency or volumetric energy density of the secondary battery 10, and by allowing the electrode tab 120 to be bent to be in close contact with the end of the electrode assembly 110, the terrace area (edge area) of the pouch 130 may be minimized.

Referring to FIG. 1, the pouch 130 is provided to protect components such as the electrode assembly 110 and the electrolyte, while supplementing electrochemical properties by the electrode assembly 110 and the electrolyte and ensuring heat dissipation.

The pouch 130 may be provided in various structures capable of fully surrounding the perimeter of the electrode assembly 110, and the present disclosure is not limited or restricted by the structure of the pouch 130.

For example, the pouch 130 may be provided by bonding a lower sheet and an upper sheet that define a receiving space for cooperatively accommodating the electrode assembly 110 therein.

For example, the pouch 130 may be manufactured by bonding the side portions (edges) of the lower sheet and the upper sheet, and as the side portions of the lower sheet and the upper sheet are bonded, a sealing portion may be formed on the side (edge side) of the pouch 130.

The pouch 130 may be formed of various materials depending on the required conditions and design specifications, and the present disclosure is not limited or restricted by the material and characteristics of the pouch 130.

For example, the pouch 130 may be provided in a multilayer film structure in which an inner layer, a middle layer, and an outer layer are laminated. For example, a polyolefin resin layer that is a thermal bonding layer having heat sealability and serving as a sealing material may be used as the inner layer, an aluminum layer that is a metal layer serving as both a substrate to maintain mechanical strength and a barrier layer against moisture and oxygen may be used as the middle layer, and a nylon layer that serves as both a substrate and a protective layer may be used as the outer layer.

Referring to FIGS. 1 to 8, the electrode lead 200 and the protector 300 are provided to form an electrode lead assembly 20 that connects the electrode tab 120 and an external power source.

More specifically, the electrode lead 200 includes a first lead portion 210 electrically connected to the electrode tab 120 and accommodated inside the pouch 130 to be stacked on the electrode tab 120, and a second lead portion 220 having one end connected to the first lead portion 210 and the other end exposed to the outside of the pouch 130.

The first lead portion 210 and the second lead portion 220 may be formed of a conventional metal material (e.g., copper, aluminum) that may be electrically connected to the electrode tab 120, and the present disclosure is not limited or restricted by the material and characteristics of the first lead portion 210 and the second lead portion 220.

The first lead portion 210 is electrically connected to the electrode tab 120 and may be provided in various structures capable of being accommodated inside the pouch 130 to be stacked on the electrode tab 120, and the present disclosure is not limited or restricted by the structure and shape of the first lead portion 210.

For example, the first lead portion 210 may be formed in a roughly flat rectangular sheet shape, and the first lead portion 210 may be in close contact with the outer surface of the electrode tab 120 bent with respect to the electrode assembly 110 to make surface contact. According to another embodiment of the present disclosure, the first lead portion may be formed in an elliptical shape or other shapes.

The second lead portion 220 may be provided in various structures having one end connected to the first lead portion 210 and the other end exposed to the outside of the pouch 130, and the present disclosure is not limited or restricted by the structure and shape of the second lead portion 220.

For example, the second lead portion 220 may be formed in a roughly flat rectangular sheet shape.

Preferably, the second lead portion 220 may be disposed perpendicular to the first lead portion 210.

The first lead portion 210 and the second lead portion 220 may be connected in various ways depending on required conditions and design specifications, and the present disclosure is not limited or restricted by the connection structure of the first lead portion 210 and the second lead portion 220.

Referring to FIGS. 1 to 3, according to a preferred embodiment of the present disclosure, the secondary battery 10 may include a connection lead portion 230 that is bent with respect to the first lead portion 210 and the second lead portion 220 therebetween and continuously connects the first lead portion 210 and the second lead portion 220.

The connection lead portion 230 may be provided in various structures capable of continuously connecting the first lead portion 210 and the second lead portion 220, and the present disclosure is not limited or restricted by the structure and shape of the connection lead portion 230.

For example, the connection lead portion 230 may be formed to have a roughly "L" shape to continuously connect the first lead portion 210 and the second lead portion 220.

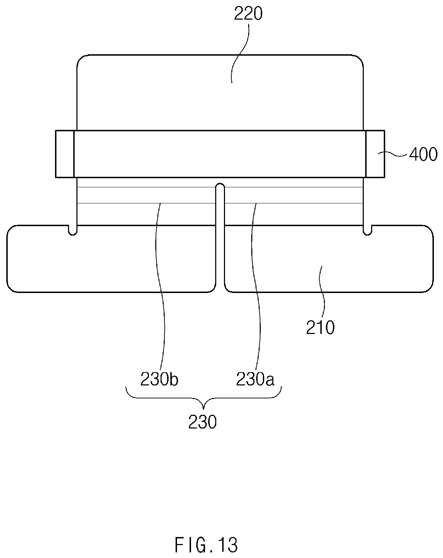

Hereinafter, an example in which the connection lead portion 230 includes a first connection lead portion (see 230a of FIG. 13) and a second connection lead portion (see 230b of FIG. 13), and the first connection lead portion 230a and the second connection lead portion 230b are bent in opposite directions (e.g., the first connection lead portion is bent to be disposed on one surface of the second lead portion, and the second connection lead portion is bent to be disposed on the other surface of the second lead portion) will be described. According to another embodiment of the present disclosure, the first connection lead portion and the second connection lead portion may be configured to be bent in the same direction.

According to a preferred embodiment of the present disclosure, the first lead portion 210, the connection lead portion 230, and the second lead portion 220 constituting the electrode lead 200 may be formed by continuously bending a single lead portion fabric.

In the above-described and illustrated embodiment of the present disclosure, an example in which the first lead portion 210 and the second lead portion 220 are continuously connected through the connection lead portion 230 (e.g., the first lead portion, the connection lead portion, and the second lead portion are formed by continuously bending a single lead portion fabric) is described, but according to another embodiment of the present disclosure, the first lead portion 210 and the second lead portion 220 that are manufactured separately may be integrally connected by welding.

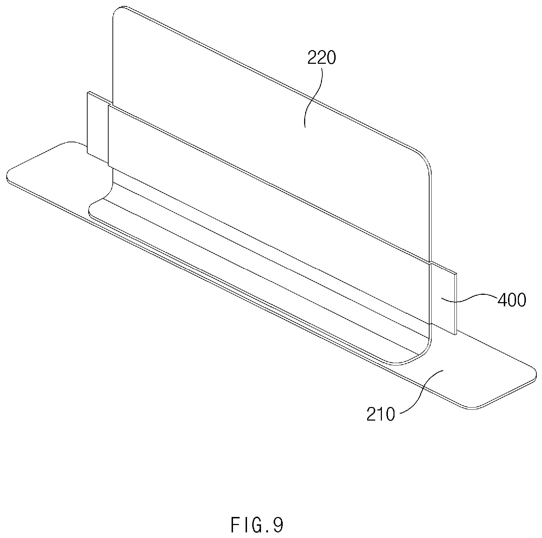

That is, referring to FIG. 9, according to another embodiment of the present disclosure, the electrode lead 200 includes the first lead portion 210 and the second lead portion 220, wherein the first lead portion 210 and the second lead portion 220 may be integrally connected by welding (e.g., laser welding or spot welding).

According to a preferred embodiment of the present disclosure, the secondary battery 10 may include at least one of a first guide slot 240 formed in the first lead portion 210 to allow the electrode tab 120 to be exposed and a second guide slot 250 formed in the connection lead portion 230 to allow the electrode tab 120 to be exposed.

Hereinafter, an example in which the first guide slot 240 is formed in the first lead portion 210 and the second guide slot 250 is formed in the connection lead portion 230 will be described.

The first guide slot 240 and the second guide slot 250 are provided to secure a welding part (area) of the electrode lead 200 with respective to the electrode tab 120 and to more stably maintain the arrangement state of the electrode lead 200 with respective to the electrode tab 120.

That is, while the first lead portion 210 is stacked on the electrode tab 120, a portion of the electrode tab 120 may be exposed through the first guide slot 240 and the second guide slot 250, and the first lead portion 210 and the electrode tab 120 may be welded through the first guide slot 240 and the second guide slot 250.

The first guide slot 240 and the second guide slot 250 may be provided in various structures depending on required conditions and design specifications, and the present disclosure is not limited or restricted by the structure and shape of the first guide slot 240 and the second guide slot 250.

For example, the first guide slot 240 may be formed in a roughly linear slot shape, and may be formed along the central portion of the first lead portion 210.

The second guide slot 250 may be formed in a roughly linear slot shape, and a plurality of second guide slots 250 may be formed to be spaced apart at predetermined intervals along the length direction of the first lead portion 210. Preferably, the second guide slots 250 may be formed symmetrically on both sides of the connection lead portion 230 based on the first guide slot 240.

The protector 300 is provided to minimize interference and contact between the electrode lead 200 and the pouch 130, to minimize damage to and deformation of the pouch 130, and to surround the edge of the first lead portion 210.

That is, conventionally, there is a problem in that the pouch 130 is deformed or damaged due to interference (contact) between the electrode lead 200 accommodated inside the pouch 130 and the pouch itself 130. Moreover, if the pouch 130 is deformed or damaged, the electrolyte may leak, which results in a problem of not only degrading the performance and life of the secondary battery, but also increasing the risk of explosion.

However, by providing a protector 300 to surround the edge of the first lead portion 210 of the electrode lead 200 accommodated inside the pouch 130, the embodiment of the present disclosure may obtain the advantageous effect of minimizing interference and contact between the electrode lead 200 and the pouch 130, and minimizing damage to and deformation of the pouch 130.

The protector 300 may be provided in various structures capable of surrounding the edge of the first lead portion 210, and the present disclosure is not limited or restricted by the structure of the protector 300.

For reference, in the embodiment of the present disclosure, when the protector 300 surrounds the edge of the first lead portion 210, it is defined as including both the protector 300 fully surrounding the edge of the first lead portion 210 and the protector 300 partially surrounding the edge of the first lead portion 210.

According to a preferred embodiment of the present disclosure, the protector 300 may include a first protector member 310 provided to surround an edge of a central area of the first lead portion 210.

The first protector member 310 may be provided in various structures capable of surrounding an edge of a central area of the first lead portion 210, and the present disclosure is not limited or restricted by the structure of the first protector member 310.

According to a preferred embodiment of the present disclosure, the first protector member 310 may include a first protector body 312 provided to cover one surface of the first lead portion 210 facing the electrode tab 120; and a first protector protrusion 314 provided at an end of the first protector body 312 and defining a first receiving groove 314a in which the edge of the central area of the first lead portion 210 is accommodated.

The first protector body 312 may be provided in various structures capable of covering one surface of the first lead portion 210 facing the electrode tab 120, and the present disclosure is not limited or restricted by the structure and shape of the first protector body 312.

For example, the first protector body 312 may be configured to have a roughly rectangular plate shape. According to another embodiment of the present disclosure, the first protector body may be formed in a circular shape or other shapes.

The first protector protrusion 314 is provided at the end of the first protector body 312 to define a first receiving groove 314a in which the edge of the central area of the first lead portion 210 is accommodated.

The first protector protrusion 314 may be provided in various structures capable of defining the first receiving groove 314a, and the present disclosure is not limited or restricted by the structure of the first protector protrusion 314.

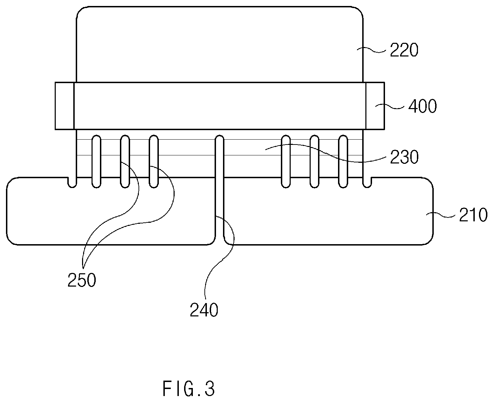

For example, the first protector protrusion 314 may be provided at each of the upper end and the lower end of the first protector body 312 in the vertical direction (based on FIG. 3), and the first protector protrusion 314 and the first protector body 312 may cooperatively form a first receiving groove 314a in a roughly "U" shape.

In the above-described and illustrated embodiment of the present disclosure, an example in which the first protector protrusion 314 is provided at each of the upper end and the lower end of the first protector body 312 is described, but according to another embodiment of the present disclosure, the first protector protrusion may be formed at only one of the upper end and the lower end of the first protector body in the vertical direction.

According to a preferred embodiment of the present disclosure, a first gap 314b may be defined between one surface of the first lead portion 210 facing the electrode tab 120 and the electrode assembly 110 via the first protector member 310.

Here, the first gap 314b may be understood as a gap defined between one surface of the first lead portion 210 and the electrode assembly 110 by the thickness of the first protector protrusion 314.

In this way, by defining a first gap 314b (space) between one surface of the first lead portion 210 and the electrode assembly 110 via the first protector member 310, the embodiment of the present disclosure may obtain the advantageous effect of minimizing mutual interference (contact) between the first lead portion 210 and the electrode assembly 110, and minimizing deformation of and damage to the first lead portion 210 and the electrode assembly 110 due to interference between the first lead portion 210 and the electrode assembly 110.

According to a preferred embodiment of the present disclosure, the protector 300 may include a second protector member 320 provided to surround an edge of a side area of the first lead portion 210.

The second protector member 320 may be provided in various structures capable of surrounding an edge of a side area of the first lead portion 210, and the present disclosure is not limited or restricted by the structure of the second protector member 320.

According to a preferred embodiment of the present disclosure, the second protector member 320 may include a second protector body 322 formed along the edge of the side area of the first lead portion 210; and a second protector protrusion 324 provided on the second protector body 322 and defining a second receiving groove 324a in which the edge of the side area of the first lead portion 210 is accommodated.

The second protector body 322 may be provided in various structures capable of surrounding the edge of the side area of the first lead portion 210, and the present disclosure is not limited or restricted by the structure and shape of the second protector body 322.

For example, the second protector body 322 may be configured to have a roughly "C" shape capable of surrounding the edge of the side area of the first lead portion 210. According to another embodiment of the present disclosure, the second protector body may be formed in a circular shape or other shapes.

The second protector protrusion 324 is provided on the inner surface of the second protector body 322 to define a second receiving groove 324a in which the edge of the side area of the first lead portion 210 is accommodated.

The second protector protrusion 324 may be provided in various structures capable of defining the second receiving groove 324a, and the present disclosure is not limited or restricted by the structure of the second protector protrusion 324.

For example, the second protector protrusion 324 may be formed continuously along the inner surface of the second protector body 322, and the second protector protrusion 324 and the second protector body 322 may cooperatively form a second receiving groove 324a in a roughly "U" shape.

In the above-described and illustrated embodiment of the present disclosure, an example in which the second protector protrusion 324 is formed continuously along the inner surface of the second protector body 322 is described, but according to another embodiment of the present disclosure, a plurality of second protector protrusions may be formed to be spaced apart at predetermined intervals along the inner surface of the second protector body.

According to a preferred embodiment of the present disclosure, a second gap 324b may be defined between the other surface of the first lead portion 210 facing the pouch 130 and the pouch 130 via the second protector member 320.

Here, the second gap 324b may be understood as a gap defined between the other surface of the first lead portion 210 and the pouch 130 by the thickness of the second protector protrusion 324.

In this way, by defining a second gap 324b (space) between the other surface of the first lead portion 210 and the pouch 130 via the second protector member 320, the embodiment of the present disclosure may obtain the advantageous effect of minimizing mutual interference (contact) between the first lead portion 210 and the pouch 130, and minimizing deformation of and damage to the pouch 130 due to interference between the first lead portion 210 and the pouch 130.

According to a preferred embodiment of the present disclosure, the protector 300 may be provided to be selectively detachable from the first lead portion 210.

For example, the first protector member 310 may be selectively detachably coupled to the first lead portion 210 by allowing the edge of the first lead portion 210 to be accommodated in the first receiving groove 314a, and the second protector member 320 may be selectively detachably coupled to the first lead portion 210 by allowing the edge of the first lead portion 210 to be accommodated in the second receiving groove 324a.

According to another preferred embodiment of the present disclosure, the protector 300 may be formed as a unitary body with the first lead portion 210 by double injection molding.

For example, a conventional insert method may be utilized as a method for forming the protector 300. For example, the first lead portion 210 may be manufactured in advance and then disposed inside a mold (die), and by injecting and curing a molten material (e.g., resin) into the mold, the first lead portion 210 and the protector 300 may be formed integrally.

In this way, by forming the protector 300 integrally with the first lead portion 210 by double injection molding, a separate assembly process of assembling the protector 300 to the first lead portion 210 may be excluded, thereby obtaining the advantageous effect of simplifying the manufacturing process of the electrode lead assembly 20.

In the above-described and illustrated embodiment of the present disclosure, an example in which the protector 300 is detachably coupled to the first lead portion 210 or the protector 300 and the first lead portion 210 are integrally formed by double injection molding is described, but according to another embodiment of the present disclosure, the protector may be coupled (bound) to the first lead portion using adhesive tape or a separate fastening member (e.g., a hook).

The protector 300 may be made of various materials having electrical insulation, and the present disclosure is not limited or restricted by the material or characteristics of the protector 300.

For example, the protector 300 (the first protector member and the second protector member) may be made of a conventional synthetic resin material having electrical insulation.

According to a preferred embodiment of the present disclosure, the corners of the protector 300 may be rounded (or chamfered).

In this way, by rounding (or chamfering) the corners of the protector 300, the embodiment of the present disclosure may obtain the advantageous effect of more effectively suppressing damage to the pouch 130 due to contact between the protector 300 and the pouch 130.

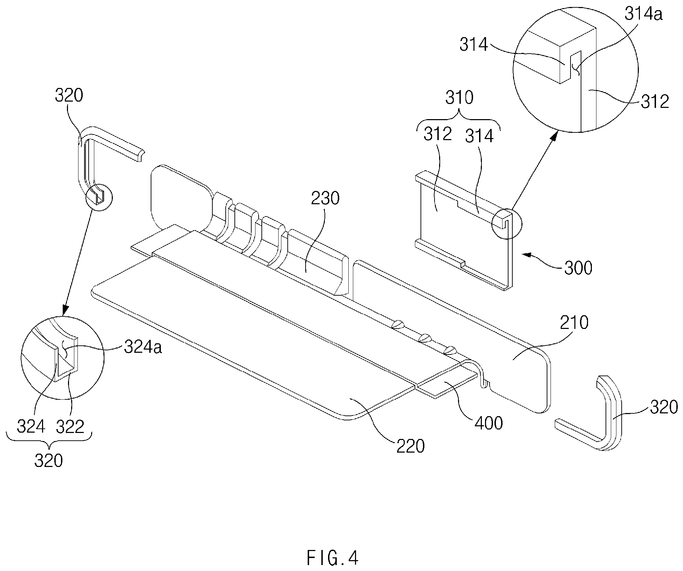

Hereinafter, the assembly process of the electrode lead assembly 20 and the electrode tab 120 according to the embodiment of the present disclosure will be described with reference to FIGS. 4 to 7.

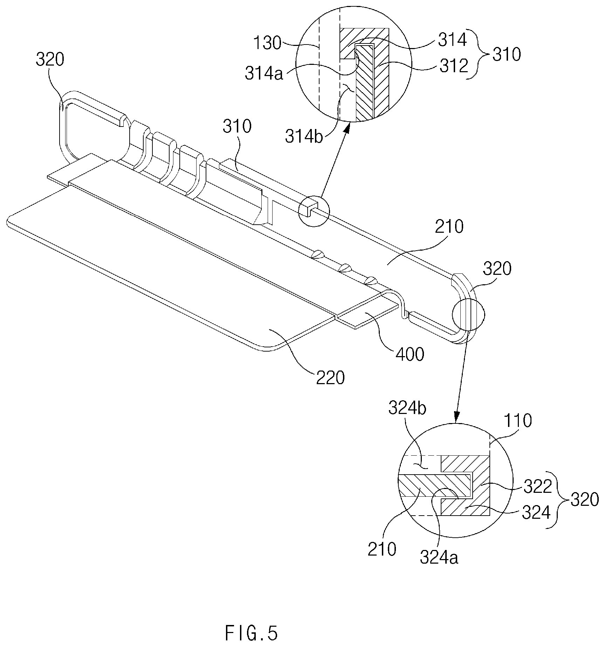

First, as shown in FIGS. 4 and 5, an electrode lead assembly 20 including an electrode lead 200 and a protector 300 is prepared. More specifically, the electrode lead 200 may be provided including a first lead portion 210 and a second lead portion 220, and the first protector member 310 and the second protector member 320 may be provided to surround the edge of the first lead portion 210.

Next, as shown in FIG. 6, the electrode tab 120 is bent in a direction perpendicular to the length direction (overall length direction) of the electrode assembly 110 so that the electrode tab 120 is in close contact with the end of the electrode assembly 110.

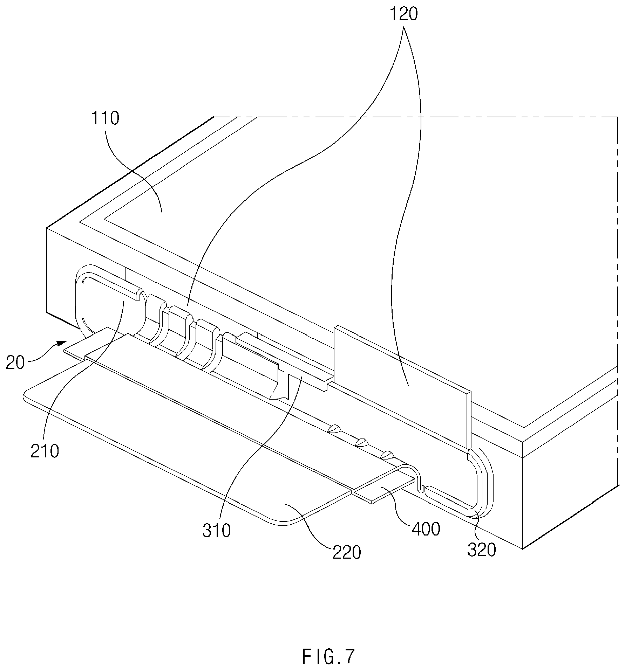

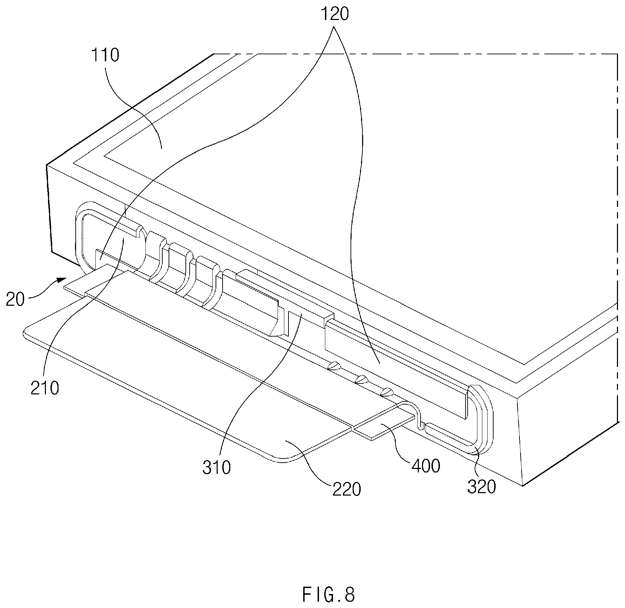

Next, as shown in FIG. 7, the electrode lead assembly 20 is disposed adjacent to the electrode assembly 110 so that the first lead portion 210 is in close contact with the outer surface of the bent electrode tab 120, and in this state, as shown in FIG. 8, the end of the electrode tab 120 is bent, and then the first lead portion 210 and the electrode tab 120 are welded, thereby completing the assembly of the electrode lead assembly 20 to the electrode assembly 110.

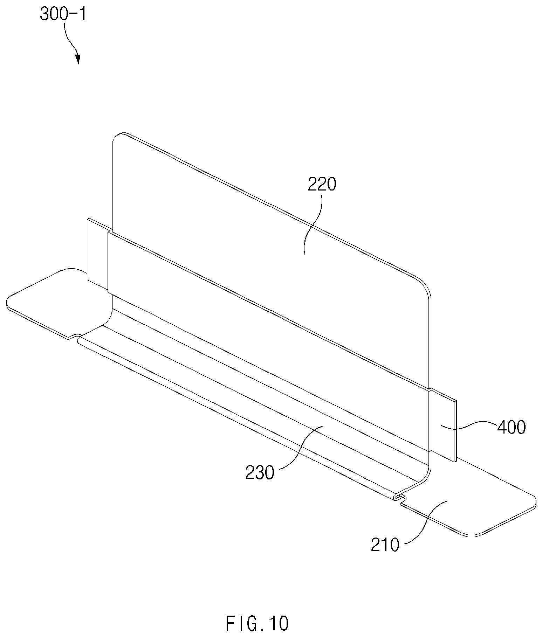

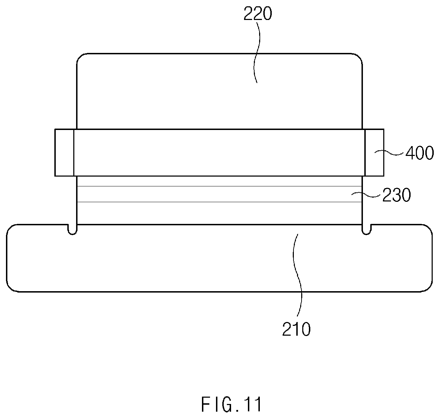

Meanwhile, in the above-described and illustrated embodiment of the present disclosure, an example in which the connection lead portion 230 continuously connecting the first lead portion 210 and the second lead portion 220 includes the first connection lead portion 230a and the second connection lead portion 230b, and the first connection lead portion 230a and the second connection lead portion 230b are bent in opposite directions is described, but according to another embodiment of the present disclosure, as shown in FIGS. 10 and 11, it is also possible to configure the first lead portion 210 and the second lead portion 220 to be connected via a single connection lead portion 230, and the connection lead portion 230 to be bent in a single direction.

Additionally, as shown in FIGS. 10 and 11, according to another embodiment of the present disclosure, it is possible to exclude the first guide slot 240 from the first lead portion 210 and the second guide slot 250 from the connection lead portion 230.

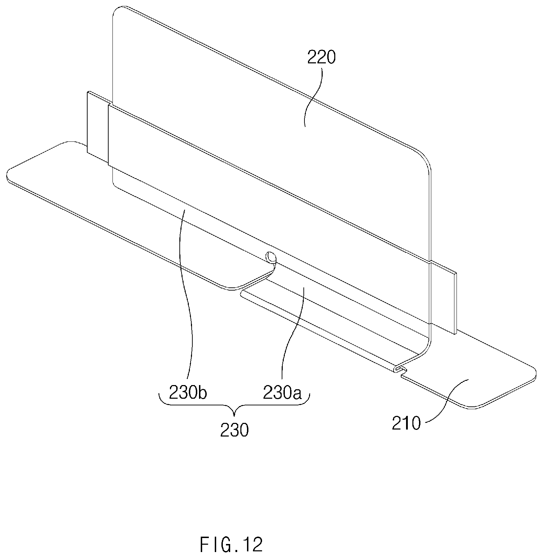

Alternatively, as shown in FIGS. 12 and 13, according to still another embodiment of the present disclosure, the connection lead portion 230 continuously connecting the first lead portion 210 and the second lead portion 220 includes the first connection lead portion 230a and the second connection lead portion 230b, and the first connection lead portion 230a and the second connection lead portion 230b are configured to be bent in opposite directions, wherein the second guide slot 250 may be excluded from the connection lead portion 230, and the first guide slot 240 may be formed only in the first lead portion 210.

According to a preferred embodiment of the present disclosure, the secondary battery 10 may include an insulation member 400 interposed between the pouch 130 and the second lead portion 220.

The insulation member 400 is provided to suppress electrical conduction between the second lead portion 220 and the pouch 130 while maintaining the sealing properties of the pouch 130.

The insulation member 400 may be formed of a conventional non-conductive insulator (e.g., insulating tape) having non-conductivity, and the present disclosure is not limited or restricted by the material or characteristics of the insulation member 400.

Although the present disclosure has been described centered on the embodiment hereinabove, this is merely an example and does not limit the present disclosure, and those having ordinary skill in the art will understand that various modifications and applications not exemplified above are possible without departing from the essential characteristics of the present embodiment. For example, each component specifically shown in the embodiment may be modified and implemented. And, the differences related to such modifications and applications should be construed as being included in the scope of the present disclosure defined in the appended claims.

### [List of Reference Numerals]

10: Secondary battery
20: Electrode lead assembly
110: Electrode assembly
120: Electrode tab
130: Pouch
200: Electrode lead
210: First lead portion
220: Second lead portion
230: Connection lead portion
230a: First connection lead portion
230b: Second connection lead portion
240: First guide slot
250: Second guide slot
300: Protector
310: First protector member
312: First protector body
314: First protector protrusion
314a: First receiving groove
314b: First gap
320: Second protector member
322: Second protector body
324: Second protector protrusion
324a: Second receiving groove
324b: Second gap
400: Insulation member

## Claims

1. A secondary battery comprising:
an electrode assembly;
an electrode tab electrically connected to the electrode assembly and bent to be in close contact with an end of the electrode assembly;
a pouch provided to surround a perimeter of the electrode assembly;
an electrode lead comprising a first lead portion electrically connected to the electrode tab and accommodated inside the pouch to be stacked on the electrode tab, and a second lead portion having one end connected to the first lead portion and the other end exposed to the outside of the pouch; and
a protector provided to surround an edge of the first lead portion.

2. The secondary battery according to claim 1,
wherein the protector comprises a first protector member provided to surround an edge of a central area of the first lead portion.

3. The secondary battery according to claim 2,
wherein the first protector member comprises:
a first protector body provided to cover one surface of the first lead portion facing the electrode tab; and
a first protector protrusion provided at an end of the first protector body and defining a first receiving groove in which the edge of the central area of the first lead portion is accommodated.

4. The secondary battery according to claim 2,
wherein a first gap is defined between one surface of the first lead portion facing the electrode tab and the electrode assembly via the first protector member.

5. The secondary battery according to claim 1,
wherein the protector comprises a second protector member provided to surround an edge of a side area of the first lead portion.

6. The secondary battery according to claim 5,
wherein the second protector member comprises:
a second protector body formed along the edge of the side area of the first lead portion; and
a second protector protrusion provided on the second protector body and defining a second receiving groove in which the edge of the side area of the first lead portion is accommodated.

7. The secondary battery according to claim 5,
wherein a second gap is defined between the other surface of the first lead portion facing the pouch and the pouch via the second protector member.

8. The secondary battery according to claim 1,
wherein the second lead portion is provided perpendicular to the first lead portion.

9. The secondary battery according to claim 1,
wherein the first lead portion and the second lead portion are integrally connected by welding.

10. The secondary battery according to claim 1, comprising:
a connection lead portion that is bent with respect to the first lead portion and the second lead portion and continuously connects the first lead portion and the second lead portion.

11. The secondary battery according to claim 10, comprising at least one of:
a first guide slot formed in the first lead portion to allow the electrode tab to be exposed; and
a second guide slot formed in the connection lead portion to allow the electrode tab to be exposed.

12. The secondary battery according to claim 1,
wherein the protector is provided to be selectively detachable from the first lead portion.

13. The secondary battery according to claim 1,
wherein the protector is formed as a unitary body with the first lead portion by double injection molding.

14. An electrode lead assembly for a secondary battery comprising an electrode assembly; an electrode tab electrically connected to the electrode assembly and bent to be in close contact with an end of the electrode assembly; and a pouch provided to surround a perimeter of the electrode assembly, the electrode lead assembly comprising:
an electrode lead comprising a first lead portion electrically connected to the electrode tab and accommodated inside the pouch to be stacked on the electrode tab, and a second lead portion having one end connected to the first lead portion and the other end exposed to the outside of the pouch; and
a protector provided to surround an edge of the first lead portion.

15. The electrode lead assembly according to claim 14,
wherein the protector comprises at least one of:
a first protector member provided to surround an edge of a central area of the first lead portion, and
a second protector member provided to surround an edge of a side area of the first lead portion.

16. The electrode lead assembly according to claim 15,
wherein the first protector member comprises:
a first protector body provided to cover one surface of the first lead portion facing the electrode tab; and
a first protector protrusion provided at an end of the first protector body and defining a first receiving groove in which the edge of the central area of the first lead portion is accommodated.

17. The electrode lead assembly according to claim 15,
wherein the second protector member comprises:
a second protector body formed along the edge of the side area of the first lead portion; and
a second protector protrusion provided on the second protector body and defining a second receiving groove in which the edge of the side area of the first lead portion is accommodated.

18. The electrode lead assembly according to claim 15,
wherein a first gap is defined between one surface of the first lead portion facing the electrode tab and the electrode assembly via the first protector member, and
wherein a second gap is defined between the other surface of the first lead portion facing the pouch and the pouch via the second protector member.

19. The electrode lead assembly according to claim 14, comprising:
a connection lead portion that is bent with respect to the first lead portion and the second lead portion and continuously connects the first lead portion and the second lead portion.

20. The electrode lead assembly according to claim 19, comprising at least one of:
a first guide slot formed in the first lead portion to allow the electrode tab to be exposed; and
a second guide slot formed in the connection lead portion to allow the electrode tab to be exposed.
